**Europäisches Patentamt**

**European Patent Office**

**Office européen des brevets**

(11) Numéro de publication: **0 100 265 B1**

# (12) FASCICULE DE BREVET EUROPEEN

(45) Date de publication du fascicule du brevet:
**15.07.87**

(21) Numéro de dépôt: **83401446.6**

(22) Date de dépôt: **12.07.83**

(51) Int. Cl.⁴: **B 32 B 31/00**, B 29 C 63/02, B 29 D 11/00, C 03 C 27/12

(54) **Procédé pour recouvrir d'une pellicule de protection en matière plastique une ébauche de verre de lunettes et dispositif pour la réalisation de ce procédé.**

(30) Priorité: **19.07.82 FR 8212542**

(43) Date de publication de la demande:
**08.02.84 Bulletin 84/6**

(45) Mention de la délivrance du brevet:
**15.07.87 Bulletin 87/29**

(84) Etats contractants désignés:
**AT BE CH DE FR GB IT LI LU NL SE**

(56) Documents cités:
**EP - A - 0 026 140
FR - A - 1 369 216
FR - A - 2 230 599
US - A - 2 828 799
US - A - 3 322 598**

(73) Titulaire: **SAINT-GOBAIN VITRAGE, Les Miroirs 18, avenue d'Alsace, F-92400 Courbevoie (FR)**

(84) Etats contractants désignés: **BE CH FR GB IT LI LU NL SE AT**

(73) Titulaire: **VEGLA Vereinigte Glaswerke GmbH, Viktoriaallee 3-5, D-5100 Aachen (DE)**

(84) Etats contractants désignés: **DE**

(72) Inventeur: **Grumbach, Richard, Forsterheiderstrasse 17, D-5100 Aachen (DE)**
Inventeur: **Gillner, Manfred, Rollefstrasse 52B, D-5100 Aachen (DE)**
Inventeur: **Schilde, Heinz-Josef, Salmanusstrasse 40, D-5102 Wuerselen (DE)**
Inventeur: **Tiedemann, Helmut, Maarstrasse 37, D-5112 Baesweiler (DE)**

(74) Mandataire: **Muller, René et al, SAINT-GOBAIN RECHERCHE 39, quai Lucien Lefranc, F-93304 Aubervilliers (FR)**

## Description

La présente invention concerne un procédé pour recouvrir d'une pellicule de protection en matière plastique, la face d'une ébauche en verre minéral ou organique de profil plan ou bombé, en particulier d'une ébauche de verre de lunettes, selon lequel, dans un premier stade, on positionne l'ébauche et la pellicule de protection l'une par rapport à l'autre et on les presse l'une contre l'autre pour réaliser une jonction préliminaire tout en éliminant largement l'air présent entre l'ébauche et la pellicule de protection, puis on réalise la jonction finale dans un ou plusieurs autres stades du procédé par application d'une température et d'une pression plus élevées.

Lors du recouvrement d'ébauches de verre au moyen de pièces de pellicule, il est courant de recourir à un procédé en plusieurs stades. Au cours du premier stade du procédé, on cherche à obtenir une adhérence préliminaire de la pellicule en évitant autant que possible les inclusions d'air entre la surface du verre et la pellicule. Le dernier stade du procédé, au cours duquel on atteint, par application d'une température et d'une pression plus élevées, la jonction complète de la pellicule avec la surface du verre, qui aboutit à la transparence complète de l'ébauche recouverte, est en général effectuée dans un autoclave.

Au cours du premier stade du procédé pour la compression préliminaire, la pièce de pellicule est en pratique posée sur un support plan et l'ébauche est posée sur la pièce de pellicule de telle sorte qu'elle s'applique par son bord sur la pièce de pellicule. La pièce de pellicule est alors repoussée dans le creux de l'ébauche par des moyens pneumatiques ou mécaniques.

Lorsqu'on réalise le recouvrement selon ce procédé connu, le résultat après la jonction finale est souvent peu satisfaisant. Il s'est avéré, dans ce cas, qu'une des causes pour laquelle la jonction finale peut être médiocre est une jonction préalable imparfaite pendant le premier stade du procédé.

Des procédés d'application de film en matière plastique sur des objets en verre sont connus. Par exemple le document US-A-2 828 799 décrit un procédé pour envelopper au moins une portion d'un objet à surface convexe. Ou encore le document US-A-3 322 598 décrit un procédé et un dispositif pour recouvrir la face concave d'une ébauche. Dans ces documents l'objet à protéger ou recouvrir est toujours disposé sous le film de protection et ce dernier est toujours maintenu sur sa périphérie pendant l'application. Il s'ensuit que ces procédés d'application nécessitent l'utilisation d'un film de dimensions beaucoup plus importantes que les dimensions de la surface à recouvrir. D'autre part, le maintien de la périphérie du film au cours de l'application peut créer des défauts optiques ou encore peut altérer les propriétés mécaniques ou bio-mécaniques du film de protection.

L'invention a pour but, dans le procédé de recouvrement à plusieurs stades précités, d'améliorer le mode de travail du premier stade de telle sorte que l'on obtienne une jonction préliminaire sans défaut de la pellicule à la surface du verre, tout en évitant les inclusions d'air et sans altérer les propriétés mécaniques et bio-mécaniques de la pellicule de protection.

L'invention réside dans le fait qu'avant de presser la pellicule de protection sur la surface de l'ébauche, on positionne l'ébauche et la pièce de pellicule à une certaine distance l'une de l'autre au moyen de dispositifs de retenue séparés, l'ébauche étant disposée au-dessus de la pellicule de protection, on les maintient d'une manière telle que le bord de l'ébauche et la pièce de pellicule ne se touchent pas et qu'au cours de l'assemblage préliminaire par pressage, la périphérie de la pellicule de protection est libre par rapport au dispositif de retenue.

Suivant l'invention, l'ébauche et la pièce de pellicule qui présente des dimensions approximativement égales à celles de l'ébauche ne sont pas posées l'une sur l'autre avant d'être pressées l'une contre l'autre, mais elles sont chacune saisies par un dispositif de retenue qui leur est propre et elles sont maintenues séparées l'une de l'autre avant et pendant le premier stade de la jonction préliminaire. L'air présent entre la surface du verre et la pellicule peut, de cette façon, mieux s'échapper.

L'ébauche et la pièce de pellicule sont avantageusement maintenues à une distance l'une de l'autre telle que l'écart entre la pellicule et le bord de l'ébauche soit approximativement de 0,5 à 3 mm. On obtient de bons résultats pour une distance d'environ 1 mm entre la pellicule et le bord de l'ébauche de verre.

Dans une réalisation avantageuse de l'invention, la pièce de pellicule est pressée contre la surface du verre pneumatiquement à l'aide d'une pression d'air, l'air comprimé agissant sur la pièce de pellicule par des ouvertures prévues dans la surface de retenue de cette pièce de pellicule et ce, d'une manière telle, que la pression agissant au centre de la pièce de pellicule soit plus élevée que celle agissant dans ses zones marginales. Cette mesure peut être réalisée de diverses façons. Ainsi, par exemple, on peut alimenter les ouvertures de sortie d'air se trouvant dans la zone centrale de la surface de retenue pour la pièce de pellicule d'une pression plus élevée que les ouvertures situées dans la zone marginale. On peut aussi concevoir la surface de retenue, de telle sorte que dans la zone centrale, un plus grand nombre d'ouvertures de sortie d'air puissent être alimentées de la même pression d'air. Par contre, on peut aussi procéder en disposant sur la surface de retenue pour la pièce de pellicule, par-dessus les ouvertures de sortie d'air, une membrane élastique, comme le caoutchouc, dont la grandeur correspond approximativement celle de la pièce de pellicule et qui est fixée le long de sa périphérie. Lorsque la surpression agit sur la face inférieure de la membrane, celle-ci se bombe à partir du centre et presse ainsi la pièce de pellicule contre la surface du verre sous une pression qui va en décroissant de l'intérieur vers l'extérieur. On peut obtenir le même effet en réalisant la surface de retenue pour la pièce de pellicule sous une forme bombée.

Dans une réalisation avantageuse de l'invention, la pièce de pellicule est chauffée par des moyens disposés dans le dispositif de retenue de cette pièce de pellicule. Il s'est dans ce cas avéré particulièrement avantageux de ne pas chauffer la pièce de pellicule de manière homogène, mais de chauffer la zone centrale de la pièce de pellicule à une température plus élevée que sa zone marginale. Cette mesure favorise encore davantage le déroulement de l'opération de compression dans le sens d'un refoulement recherché du coussin d'air de l'intérieur vers l'extérieur, parce que la zone centrale plus chaude de la pellicule se déforme plus facilement sous l'effet de la pression d'air et s'applique contre l'ébauche de verre plus tôt que la zone marginale de la pellicule qui est plus froide et, par conséquent, plus raide.

L'invention concerne également un dispositif pour recouvrir d'une pellicule de protection en matière plastique la face d'une ébauche en verre minéral ou organique de profil plan ou bombé, comprenant des moyens de mise en place de l'ébauche et de la pellicule de protection à une certaine distance l'une de l'autre, et des moyens de pressage l'une contre l'autre de l'ébauche et de la pellicule de protection pour réaliser une jonction préliminaire, tout en éliminant largement l'air présent entre l'ébauche et la pellicule de protection. Le dispositif est caractérisé en ce que les moyens de mise en place de l'ébauche et de la pellicule de protection sont des dispositifs de retenue séparés, le dispositif de retenue pour la pellicule de protection 3 étant constitué d'un plateau de retenue 5 plan, ne maintenant pas sa périphérie et raccordé à des moyens de mise en dépression et en surpression pour exercer respectivement une attraction et une répulsion sur la pellicule de protection 3 et le dispositif de retenue pour l'ébauche 1 étant fait d'une ventouse 18 montée mobile, les positions réciproques du plateau de retenue 5 et de la ventouse 18 pouvant être réglées l'une par rapport à l'autre, la ventouse 18 étant disposée au-dessus du plateau de retenue 5.

Une forme d'exécution préférée d'un dispositif convenant pour la mise en œuvre du procédé est illustrée, à titre d'exemple, dans les dessins annexés, dans lesquels:

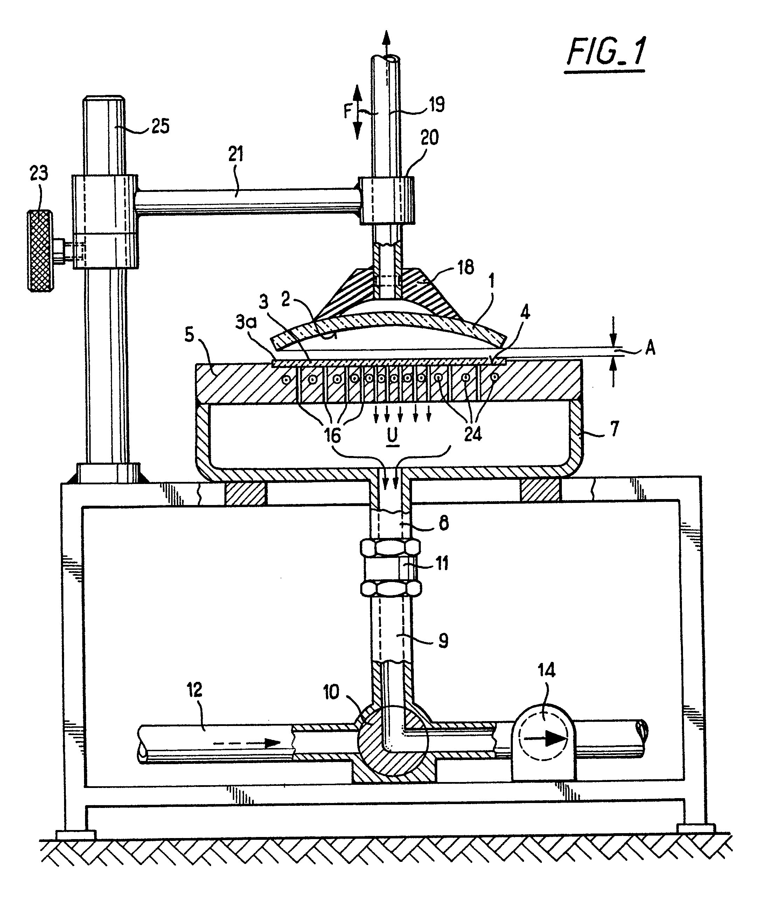

La fig. 1 illustre la disposition de l'ébauche de verre et de la pellicule de protection avant le début de la compression temporaire de la pellicule de protection;

La fig. 2 illustre cette disposition à un moment peu après l'enclenchement de la pression pneumatique, et

La fig. 3 illustre cette même disposition au dernier stade de la compression temporaire de la pellicule de protection à l'aide du dispositif pneumatique.

La face interne de l'ébauche de verre de lunettes 1, c'est-à-dire la face concave 2, doit être recouverte d'une pellicule de protection de sécurité 3 faite d'une matière thermodurcissable. A titre de pellicule de protection de sécurité, on peut utiliser à cet effet, par exemple, une pellicule d'environ 0,3 à 0,5 mm d'épaisseur en un polyuréthane présentant des propriétés d'autorégénération, tel que décrit plus en détail par la suite. Cette pellicule est pourvue d'une couche d'adhésif thermoplastique du côté à unir à la face 2 du verre, de sorte qu'elle peut être unie à la surface du verre moyennant un apport de chaleur et de pression.

La pièce de pellicule circulaire 3 est placée dans un creux circulaire 4 de diamètre correspondant sur la surface d'un plateau de retenue 5. Le plateau 5 a la forme d'un plateau couvercle supérieur d'un récipient clos 7 qui peut être raccordé, par l'intermédiaire de la tubulure de raccordement 8, du raccord 11, de la conduite 9 et de la valve de commutation 10, au choix, à une conduite d'air comprimé 12 ou à une pompe à vide 14.

A l'intérieur du creux circulaire 4, une rangée de lumières 16 est prévue dans le plateau de retenue 5, ces lumières servant d'ouvertures de passage pour le gaz. Lorsqu'une dépression U est établie en dessous du plateau de retenue 5 par raccordement à la pompe à vide 14, la pièce de pellicule 3 est attirée sur le plateau de retenue 5 et est ainsi fixée en position.

Après avoir fixé la pièce de pellicule circulaire 3 de cette façon sur le plateau de retenue 5, on amène l'ébauche de verre de lunettes 1, qui a été au préalable prise à un autre endroit adéquat par une ventouse 18 attaquant sa face convexe, dans la position souhaitée par rapport à la pièce de pellicule 3. La ventouse 18 est fixée à l'extrémité d'un tube de retenue mobile 19 par lequel la ventouse 18 est raccordée à une pompe à vide. Le tube de retenue 19 est monté mobile dans le sens de la double flèche F dans la douille de guidage 20 fixée au bras de retenue 21 et peut être immobilisé dans la position représentée. La position représentée du tube de retenue 19 est réglée de telle manière que la distance A entre la surface de la pièce de pellicule 3 et le bord inférieur de l'ébauche de verre de lunettes 1 soit d'environ 1 mm.

Des éléments chauffants 24 sont disposés à l'intérieur du plateau de retenue 5 dans la zone située en dessous du creux 4. Il s'agit avantageusement de fils électriques de chauffage par résistance. La température superficielle du plateau de retenue 5 peut, avantageusement, être réglée à l'aide d'un thermostat. Dans la zone centrale, les éléments chauffants 24 sont disposés d'une manière plus dense que dans la zone extérieure du creux 4, de sorte que la puissance de chauffage fournie est plus grande dans la zone centrale de la pièce de pellicule 3 que dans les zones périphériques. Selon les propriétés matérielles de la pellicule de protection 3, la différence de température entre la zone centrale et la zone périphérique de la pièce de pellicule 3 doit être d'environ 5 à 10 °C.

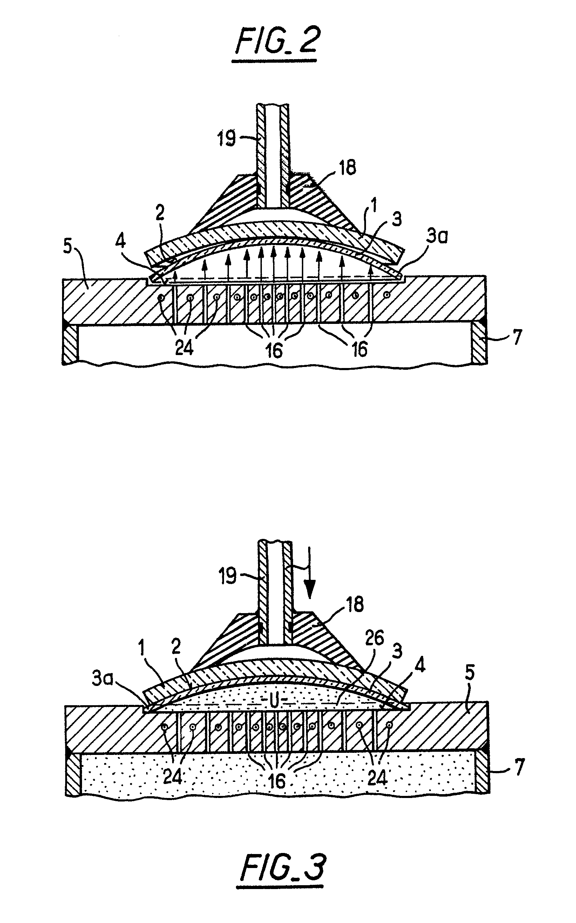

Après avoir positionné la pièce de pellicule 3 de la manière décrite et l'avoir soumise à un chauffage différencié et après avoir amené l'ébauche de verre de lunettes 1 dans la position représentée et décrite, la valve de commutation 10 est commutée sur la conduite d'air comprimé 12, de sorte que la pièce de pellicule 3 est sollicitée par de l'air comprimé (Fig. 2) par l'intermédiaire des lumières 16. Le passage de l'état de dépression à l'état de pression s'effectue brusquement, de sorte que la pièce de pellicule 3 est projetée à une vitesse relativement élevée contre la surface 2 de l'ébauche de verre de lunettes 1. Etant donné que, comme le montrent les dessins, les lumières 16 sont disposées d'une manière plus dense dans la zone centrale du creux 4 du plateau de retenue 5 que dans sa zone périphérique, la pression dynamique qui agit sur la zone centrale de la pellicule de protection 3 est plus élevée que celle qui agit sur sa zone périphérique. Ceci favorise davantage la compression recherchée de l'intérieur vers l'extérieur de la pellicule de protection 3, en particulier en rapport avec le chauffage différencié de la pellicule de protection 3. Le déroulement de l'opération de compression à ce stade est illustré sur la Fig. 2 montre comment la pellicule de protection 3 s'applique tout d'abord dans sa zone centrale contre l'ébauche de verre 1 et comment les zones latérales suivent, de sorte que l'air présent entre l'ébauche de verre 1 et la pellicule de protection 3 s'échappe vers l'extérieur.

Aussitôt que la pellicule de protection 3 est appliquée sur toute sa surface contre la surface de l'ébauche de verre 3, le tube de retenue 19 est abaissé, comme le montre la Fig. 3, et l'ébauche de verre 1 avec la pellicule de protection 3 qui y adhère est pressée contre le plateau de retenue 5. Le bord 3a de la pellicule de protection élastique 3 assure dans ce cas l'étanchéité de l'espace creux 26 formé par le plateau de retenue 5 d'une part, et par la surface concave de l'ébauche de verre 1 pourvue de la pellicule de protection 3 d'autre part. Une pression pneumatique plus élevée U s'établit de cette façon dans l'espace creux 26 et correspond à la pression de l'air dans la conduite d'air comprimé 12. A ce stade, l'adhérence de la pellicule de protection 3 à l'ébauche de verre augmente à nouveau à la suite de la pression pneumatique plus élevée qui peut, par exemple, atteindre 2 bars. Cette pression accrue agit pendant un laps de temps d'approximativement 1 seconde.

On soulève ensuite le tube de retenue 19, on l'amène dans une position latérale et en supprimant la dépression dans la ventouse 18, on enlève l'ébauche de verre 1 pourvue de la pellicule de protection 3 du dispositif.

Cette opération décrite de jonction préliminaire peut être suivie d'autres opérations de compression et de traitement thermique qui assurent la jonction finale entre la surface du verre et la pellicule de protection.

La pellicule de protection en matière plastique utilisée de préférence dans le cadre de l'invention, est formée essentiellement d'une couche de polyuréthane thermodurcissable ayant des propriétés d'autorégénération, encore appelée propriétés d'autocicatrisation. Une telle couche est décrite par exemple dans la publication de brevet française 2 398 606. Cette couche de polyuréthanne thermodurcissable est revêtue d'une couche, généralement mince, d'un adhésif thermoplastique, par exemple un polyuréthanne thermoplastique comme celui décrit dans cette même publication de brevet français précité 2 398 606.

L'ébauche en verre minéral ou organique, par exemple en polycarbonate, en polyméthacrylate de méthyle, peut présenter un profil plan ou bombé comme indiqué précédemment. Dans ce dernier cas, le bombage peut être simple ou double, ou encore sphérique.

**Revendications**

1. Procédé pour recouvrir d'une pellicule de protection en matière plastique la face d'une ébauche en verre minéral ou organique de profil plan ou bombé, selon lequel, dans un premier stade, on positionne l'ébauche et la pellicule de protection l'une par rapport à l'autre et on les presse l'une contre l'autre pour réaliser une jonction préliminaire, tout en éliminant largement l'air présent entre l'ébauche et la pellicule de protection, puis on réalise la jonction finale dans un ou plusieurs autres stades du procédé par application d'une température et d'une pression plus élevées, caractérisé en ce que les dimensions de la pellicule de protection (3) sont approximativement celles de l'ébauche (1) et qu'avant de presser la pellicule de protection (3) sur la surface (2) de l'ébauche (1), on positionne l'ébauche (1) et la pièce de pellicule de protection (3) à une certaine distance l'une de l'autre au moyen de dispositifs de retenue séparés, l'ébauche étant disposée au-dessus de la pellicule de protection qu'on les maintient d'une manière telle que le bord de l'ébauche (1) et la pellicule de protection (3) ne se touchent pas, et qu'au cours de l'assemblage par pressage, la périphérie de la pellicule de protection est libre par rapport au dispositif de retenue.

2. Procédé suivant la revendication 1, caractérisé en ce qu'on maintient l'ébauche (1) et la pellicule de protection (3) si largement espacées l'une de l'autre que la distance (A) entre le bord de l'ébauche (1) et la pellicule de protection (3) est d'environ 0,5 à 3 mm.

3. Procédé suivant les revendications 1 et 2, caractérisé en ce qu'on presse la pellicule de protection (3) sur la surface (2) de l'ébauche (1) par une surpression pneumatique.

4. Procédé suivant la revendication 3, caractérisé en ce qu'on exerce une pression superficielle spécifique plus élevée sur la zone centrale de la pellicule de protection (3) que sur sa zone marginale (3a).

5. Procédé suivant les revendications 1 à 4, caractérisé en ce qu'on chauffe la pellicule de protection (3) au moyen du dispositif de retenue, notamment le plateau de retenue (5).

6. Procédé suivant la revendication 5, caractérisé en ce qu'on chauffe la pellicule de protection (3) davantage dans sa zone centrale que dans sa zone marginale.

7. Procédé suivant les revendications 3 à 6, caractérisé en ce qu'après avoir pressé au préalable la pellicule de protection sur la surface de l'ébauche, on soumet la pellicule de protection à une pression pneumatique accrue.

8. Dispositif pour recouvrir d'une pellicule de protection en matière plastique la face d'une ébauche en verre minéral ou organique de profil plan ou bombé, comprenant des moyens de mise en place de l'ébauche et de la pellicule de protection à une certaine distance l'une de l'autre, et des moyens de pressage l'une contre l'autre de l'ébauche et de la pellicule de protection pour réaliser une jonction préliminaire, tout en éliminant largement l'air présent entre l'ébauche et la pellicule de protection, caractérisé en ce que les moyens de mise en place de l'ébauche et de la pellicule de protection sont des dispositifs de retenue séparés, le dispositif de retenue pour la pellicule de protection (3) est constitué d'un plateau de retenue (5) plan, ne maintenant pas sa périphérie et raccordé à des moyens de mise en dépression et en surpression pour exercer respectivement une attraction et une répulsion sur la pellicule de protection (3) et le dispositif de retenue pour l'ébauche (1) est fait d'une ventouse (18) montée mobile, les positions réciproques du plateau de retenue (5) et de la ventouse (18) pouvant être réglées l'une par rapport à l'autre, la ventouse (18) étant disposé au-dessus du plateau de retenue (5).

9. Dispositif suivant la revendication 8, caractérisé en ce que le plateau de retenue (5) est pourvu, dans la zone d'appui de la pellicule de protection (3), de lumières de passage de gaz (16) qui sont plus denses dans la zone centrale de la pellicule de protection (3) que dans sa zone marginale.

10. Dispositif suivant les revendications 8 et 9, caractérisé en ce que le plateau de retenue (5) est pourvu, dans la zone d'appui de la feuille de protection (3), d'éléments chauffants (24) qui fournissent davantage de chaleur dans la zone centrale de la surface d'appui que dans sa zone marginale.

11. Dispositif suivant les revendications 8 à 10, caractérisé en ce que la surface d'appui du plateau de retenue (5) pour la pellicule de protection (3) est bombée.

## Claims

1. A method of covering the surface of a blank of mineral or organic glass, of flat or curved shape, with a protective film of plastics material in which, in a first stage, the blank and the protective film are positioned one relative to the other and they are pressed together to effect preliminary joining while eliminating most of the air present between the blank and the protective film, and final joining is carried out in one or more further stages of the method by application of a higher temperature and pressure, characterised in that the dimensions of the protective film (3) are approximately those of the blank (1) and before pressing the protective film (3) on to the surface (2) of the blank (1) the blank (1) and the piece of protective film (3) are positioned at a certain distance from each other by means of separate holding devices, the blank being arranged above the protective film, they are held in such a manner that the edge of the blank (1) and the protective film (3) do not touch, and during assembly by pressing the periphery of the protective film is free from the holding device.

2. A method according to claim 1, characterised in that the blank (1) and the protective film (3) are held at such a separation that the distance (A) between the edge of the blank (1) and the protective film (3) is about 0.5 to 3 mm.

3. A method according to claim 1 or 2, characterised in that the protective film (3) is pressed on to the surface (2) of the blank (1) by an excess pneumatic pressure.

4. A method according to claim 3, characterised in that a higher specific surface pressure is exerted on the central zone of the protective film (3) than on its marginal zone (3a).

5. A method according to one of claims 1 to 4, characterised in that the protective film (3) is heated by means of the holding device, such as by a holding plate (5).

6. A method according to claim 5, characterised in that the protective film (3) is heated to a greater extent in its central zone than in its marginal zone.

7. A method according to one of claims 3 to 6, characterised in that after previous pressing of the protective film on to the blank surface, the protective film is subjected to increased pneumatic pressure.

8. A device for covering the surface of a blank of mineral or organic glass of flat or curved shape with a protective film of plastics material, comprising means for mounting the blank and the film in place at a certain distance from each other, and means for pressing the blank and protective film one against the other to effect preliminary joining while removing most of the air present between the blank and the protective layer, characterised in that the means for mounting in place the blank and the protective film are separate holding devices, the holding device for the protective film (3) comprises a flat holding plate (5) which does not hold it at the periphery and which is connected to means for providing reduced and increased pressure to exercise, respectively, attraction and repulsion on the protective film, and the holding device for the blank (1) comprising a movably mounted suction device (18), the relative positions of the holding plate (5) and the suction device (18) being adjustable, the suction device (18) being arranged above the holding plate (5).

9. A device according to claim 8, characterised in that the holding plate (5) is provided, in the zone of contact of the protective film (3), with openings for passage of gas (16) which are of greater density in the central zone of the protective film (3) than in its marginal zone.

10. A device according to claim 8 or 9, characterised in that the holding plate (5) is provided, in the zone of contact with the protective sheet (3), with heating elements (24) which provide more heat in the central zone of the contact surface than in its marginal zone.

11. A device according to one of claims 8 to 10, characterised in that the surface of contact of the holding plate (5) with the protective film (3) is curved.

**Patentansprüche**

1. Verfahren zum Aufbringen einer Schutzfolie aus Kunststoff auf die Oberfläche eines planen oder gewölbten Glas- oder Kunststoffrohlings, bei dem in einer ersten Verfahrensstufe der Rohling und die Schutzfolie zueinander positioniert und zur Herstellung einer vorläufigen Verbindung unter weitgehender Entfernung der zwischen dem Rohling und der Schutzfolie befindlichen Luft gegeneinandergedrückt werden, und die endgültige Verbindung in einer oder mehreren weiteren Verfahrensstufen durch Anwendung von erhöhtem Druck und erhöhter Temperatur erfolgt, dadurch gekennzeichnet, dass die Abmessungen der Schutzfolie (3) annähernd denjenigen des Rohlings (1) entsprechen, und dass vor dem Andrükken der Schutzfolie (3) an die Oberfläche (2) des Rohlings (1) der Rohling (1) und das Schutzfolienstück (3) mittels getrennter Haltevorrichtungen in einem bestimmten Abstand voneinander positioniert werden, wobei der Rohling oberhalb der Schutzfolie angeordnet und Rohling und Schutzfolie derart gehalten werden, dass der Rand des Rohlings (1) und die Schutzfolie (3) sich nicht berühren, und dass während des Verbindevorgangs durch Andrücken der Umfang der Schutzfolie bezüglich der Haltevorrichtung frei ist.

2. Verfahren nach Anspruch 1, dadurch gekennzeichnet, dass der Rohling (1) und die Schutzfolie (3) so weit voneinander entfernt voneinander gehalten werden, dass der Abstand (A) zwischen dem Rand des Rohlings (1) und der Schutzfolie (3) etwa 0,5 bis 3 mm beträgt.

3. Verfahren nach Anspruch 1 und 2, dadurch gekennzeichnet, dass das Andrücken der Schutzfolie (3) an die Oberfläche (2) des Rohlings (1) durch pneumatischen Überdruck erfolgt.

4. Verfahren nach Anspruch 3, dadurch gekennzeichnet, dass auf den mittleren Bereich der Schutzfolie (3) ein höherer spezifischer Flächendruck gerichtet wird als auf den Randbereich (3a) der Schutzfolie (3).

5. Verfahren nach Ansprüchen 1 bis 4, dadurch gekennzeichnet, dass die Schutzfolie (3) im mittleren Bereich stärker beheizt wird als im Randbereich.

6. Verfahren nach Anspruch 5, dadurch gekennzeichnet, dass die Schutzfolie (3) im mittleren Bereich stärker beheizt wird als im Randbereich.

7. Verfahren nach Ansprüchen 3 bis 6, dadurch gekennzeichnet, dass nach dem vorläufigen Andrücken der Schutzfolie an die Oberfläche des Rohlings die Schutzfolie einem erhöhten pneumatischen Druck ausgesetzt wird.

8. Vorrichtung zum Aufbringen einer Schutzfolie aus Kunststoff auf die Oberfläche eines planen oder gebogenen Rohlings aus Glas oder Kunststoff, mit Mitteln zum Positionieren des Rohlings und der Schutzfolie in einem bestimmten Abstand zueinander und Mitteln zum Aneinanderpressen von Rohling und Schutzfolie zur Herstellung einer vorläufigen Verbindung unter weitgehender Entfernung der Luft zwischen dem Rohling und der Schutzfolie, dadurch gekennzeichnet, dass die Positionierungsvorrichtungen für den Rohling und für die Schutzfolie getrennte Haltevorrichtungen sind, wobei die Haltevorrichtung für die Schutzfolie (3) aus einer ebenen Halteplatte (5) besteht, die den Randbereich der Schutzfolie nicht festhält und an Mittel zum Erzeugen von Unterdruck und von Überdruck angeschlossen ist, um eine Saugkraft beziehungsweise eine abstossende Druckkraft auf die Schutzfolie (3) auszuüben, und dass die Haltevorrichtung für den Rohling (1) aus einem beweglich gelagerten Sauger (18) besteht, während die gegenseitigen Stellungen der Halteplatte (5) und des Saugers (18) im Verhältnis zueinander einstellbar sind und der Sauger (18) oberhalb der Halteplatte (5) angeordnet ist.

9. Vorrichtung nach Anspruch 8, dadurch gekennzeichnet, dass die Halteplatte (5) im Auflagebereich der Schutzfolie (3) mit Gasdurchtrittsbohrungen (16) versehen ist, die im mittleren Bereich der Schutzfolie (3) dichter angeordnet sind als in ihrer Randzone.

10. Vorrichtung nach Ansprüchen 8 und 9, dadurch gekennzeichnet, dass die Halteplatte (5) im Auflagebereich der Schutzfolie (3) mit Heizelementen (24) versehen ist, die im mittleren Bereich der Auflagefläche mehr Wärme abgeben als in deren Randzone.

11. Vorrichtung nach Ansprüchen 8 bis 10, dadurch gekennzeichnet, dass die Auflagefläche der Halteplatte (5) für die Schutzfolie (3) gewölbt ist.

_FIG_1_

## FIG. 2

## FIG. 3